# EUROPÄISCHE PATENTSCHRIFT

(11) **EP 0 987 811 B1**
(45) Veröffentlichungstag und Bekanntmachung des Hinweises auf die Patenterteilung: **26.03.2008**
(21) Anmeldenummer: 99117634.8
(22) Anmeldetag: 08.09.1999
(51) Int. Cl.: H02K 3/52, H02K 3/50, H02K 5/22, H02K 3/28

(54) **Kontaktierung von Motorwicklungen**
Connecting the wires of motor windings
Connection des fils des enroulements d'un moteur

(30) Priorität: 15.09.1998 DE 19842170
(43) Veröffentlichungstag der Anmeldung: 22.03.2000
(73) Patentinhaber: WILO AG, 44263 Dortmund (DE)
(72) Erfinder: Lütkenhaus, Norbert, 59399 Olfen (DE); Schreckenberg, Stephan, 44137 Dortmund (DE)
(74) Vertreter: COHAUSZ DAWIDOWICZ HANNIG & SOZIEN

(56) Entgegenhaltungen:
- DE-A- 3 840 666
- DE-A- 19 723 664
- FR-A- 2 750 542
- US-A- 5 280 210
- US-A- 5 644 178
- US-A- 5 682 070
- PATENT ABSTRACTS OF JAPAN vol. 18, no. 617 (E-1634), 24. November 1994 (1994-11-24) -& JP 06 233483 A (HONDA MOTOR CO LTD), 19. August 1994 (1994-08-19)

## Beschreibung

Die Erfindung betrifft Elektromotoren, die zum Antrieb von Kreiselpumpen oder Lüftern geeignet sind und die einen Kontaktträger aufweisen, der in axialer Richtung auf den Stator aufschiebbar ist, wobei der Kontaktträger eine Grundplatte aufweist, die auf der der Abtriebswelle gegenüberliegenden Seite des Stators angeordnet ist und die auf der dem Stator abgewandten Außenseite Vorrichtungen zur Kontaktierung der Wicklungen trägt, wobei die Enden der Wicklungen zur Außenseite der Grundplatte geführt sind und diese in symmetrischer Teilung durchragen, wobei jeweils zwei gegenüberliegende Wicklungen über ein Leiterblech zu einem Wicklungspaar zusammengeschlossen sind und wobei die Leiterbleche auf der Außenseite der Grundplatte angeordnet sind.

Elektromotoren sind in vielfältigen Bauformen auch zum Antrieb von Pumpen und Lüftern bekannt. Dabei ist es aus der Serienfertigung beispielsweise kleiner Kreiselpumpen bekannt, die Aggregate so zu konzipieren, daß ihre Einzelteile wie Rotor, Stator und Gehäuse in axialer Richtung zusammensetzbar sind, um eine Automatisierung des Fertigungsprozesses zu begünstigen. Besonders problematisch bei dieser "in-line" Fertigung ist jedoch der Anschluß der Motorwicklungen an die Außenkontakte. Bei diesem Fertigungsschritt ist ein manuelles Eingreifen oft unvermeidlich.

Handarbeit ist immer dann notwendig, wenn die Motoren mehrere Wicklungen aufweisen, deren Enden sich beim Anschluß zwangsläufig überkreuzen müssen. So müssen beispielsweise bei Drehstrommotoren die Enden der Wicklungen in Handarbeit mit Schaltlitzen versehen und zu einem Klemmbrett geführt werden. Die Verschaltung zu einer Stern- oder Dreieckschaltung erfolgt dann über Schaltbrücken am Klemmbrett. Es sind andere Motoren bekannt, bei denen die Wicklungsenden von Hand geordnet und in eine am Stator angeordnete Steckerleiste geführt werden. Auf die Steckerleiste ist ein Klemmenkasten aufsteckbar, in dem die kreuzweise Verschaltung geschieht.

Bei der Verschaltung in solchen Klemmenkästen ist es bekannt, zur serientauglichen Kontaktierung geätzte Leiterplatten zu benutzen, auf denen die Kreuzung der Leiterbahnen realisiert ist. Der Einsatz derartiger Leiterplatten ist insofern problematisch, als dass die darauf befindlichen Leiterbahnen nur unter großem Aufwand für hohe Ströme ausgelegt werden können.

Aus der japanischen Veröffentlichungsschrift JP 6233483A ist es bekannt, einen Kontaktträger zur Kontaktierung von Wicklungen zu verwenden, der in axialer Richtung auf einen Stator aufschiebbar ist. Der Kontaktträger weist eine Grundplatte auf, die auf der dem Stator abgewandten Außenseite nach außen geführte Kontaktelemente zur Kontaktierung räumlich symmetrisch versetzt angeordneter Wicklungen trägt. Ferner ist eine ringförmige Kontaktscheibe koaxial in der Grundplatte eingelegt, wobei diese Kontaktscheibe symmetrisch angeordnete Bohrungen zur Kontaktierung jeweils eines Wicklungsendes aller Wicklung aufweist, so dass ein elektrischer Sternpunkt gebildet wird. Die Enden der Wicklungen sind zur Außenseite der Grundplatte geführt und durchragen diese in symmetrischer Teilung. Des Weiteren wird in der JP 6233483A vorgeschlagen, zur elektrischen Verbindung der Wicklungen mehrere C-förmige koaxial zum Stator in die Grundplatte eingelegte Leiterbleche zu verwenden, die voneinander mittels ringförmigen Isolierscheiben isoliert sind. Nachteilig ist hierbei, dass die Wicklungen nicht beliebig verschaltbar sind. So kommen lediglich Sternschaltungen der Motorwicklungen in Frage, wodurch die Verschaltungsmöglichkeiten stark eingeschränkt sind. Dreieck- oder Zickzackschaltungen sind nicht möglich.

Aufgabe der Erfindung ist es, einen Elektromotor zu schaffen, der eine vollständige und automatische Serienfertigung bis hin zur Kontaktierung der Wicklungsenden ermöglicht und der für den Fluss hoher Ströme ausgelegt ist, wobei eine möglichst hohe Flexibilität bei der Verschaltung der Wicklungen möglich ist.

Diese Aufgabe wird durch einen Elektromotor mit den kennzeichnenden Merkmalen des Anspruch 1 gelöst.

Vorteilhaft an dem erfindungsgemäßen Motor ist, dass er wegen der robusten Verschaltung eine hohe Zuverlässigkeit und Betriebssicherheit aufweist. Dabei lassen sich alle Komponenten insbesondere auch die zur Verschaltung bestimmte Grundplatte automatisch und in axialer Richtung fertigen und letztendlich zu einem betriebsbereiten Motor mit axialer Kontaktierung zusammensetzen. Durch die vollständig automatische Fertigung können die Fertigungskosten in erheblichem Maße gesenkt werden. Dabei ist es für die Vereinfachung der Serienfertigung unerheblich, ob die als Kontaktträger dienende Grundplatte bei der Montage des Motors oder schon in einem vorhergehenden Arbeitsgang mit Leiterblechen versehen wurde. Dabei kann die erfindungsgemäße Verschaltung nicht nur bei Motoren, sondern auch bei Generatoren eingesetzt werden.

Besonders vorteilhaft ist, dass die Grundplatte, die zugleich die Funktion einer Abschlussplatte hat, eine Verschaltung in mehreren Ebenen zulässt, so dass beliebige Kreuzungen von Leiterblechen realisierbar sind. Dabei bietet sowohl die den Wicklungen zugewandte Innenseite als auch die den Wicklungen abgewandte Außenseite der Grundplatte die Möglichkeit einer Verschaltung durch Leiterbleche in mindestens zwei Ebenen. Die einfache Kontaktierung von Drehstrommaschinen ist somit problemlos möglich. In einer zu bevorzugenden Ausführungsform sind die Wicklungen aus starrem Wicklungsdraht gewickelt, dessen abisolierte Enden sich als kurze starre Stifte besonders einfach zur Außenseite der Grundplatte führen und über Leiterbleche miteinander elektrisch verbinden lassen. Dabei bilden die starren Stifte, welche die Ausnehmungen der Grundplatte in axialer Richtung durchragen, in Verbindung mit den gebogenen Kontaktzungen, an denen die Stifte anliegen, eine solide mechanische Einheit, die ein automatisiertes Verschweißen, Verlöten, Verkrimpen oder Verklemmen zur elektrischen Kontaktierung ermöglicht.

Um eine einfache und sichere Montage zu gewährleisten ist es vorteilhaft, die Leiterbleche auf der Außenseite bzw. auf der Innenseite der Grundplatte zu befestigen. Dabei werden die Leiterbleche auf die entsprechende Seite der Grundplatte aufgesetzt bis sie hinter dafür vorgesehene Rastnasen einrasten. Diese Montage lässt sich auf einfache Weise automatisieren. Vorteilhafterweise weisen alle auf einer Seite der Grundplatte montierten Leiterbleche die gleiche Form auf. So ist eine vollständige Symmetrie gewährleistet.

Mit den erfindungsgemäßen Leiterblechen lassen sich verschiedene Kontaktierungen, beispielsweise eine Stern- oder eine Dreieckschaltung, realisieren. Insbesondere bei der Kontaktierung eines Drehstrommotors ist es vorteilhaft, jeweils zwei gegenüberliegende Spulen der insgesamt sechs symmetrisch im Kreis angeordneten Wicklungen über ein Leiterblech zu einem Wicklungspaar zu verbinden. Die Leiterbleche werden vorteilhafterweise aus Metallband gebogen oder aus Blech ausgestanzt. Auf diese Weise sind sie der Massenfertigung zugänglich.

Eine besondere Ausführungsform des erfindungsgemäßen Motors ist in den Zeichnungen 1 bis 3 dargestellt und wird im folgenden näher beschrieben. Es zeigen:
- **Figur 1**: einen Schnitt durch einen Elektromotor,
- **Figur 2**: eine perspektivische Darstellung der Grundplatte und
- **Figur 3**: eine Draufsicht auf die Grundplatte.

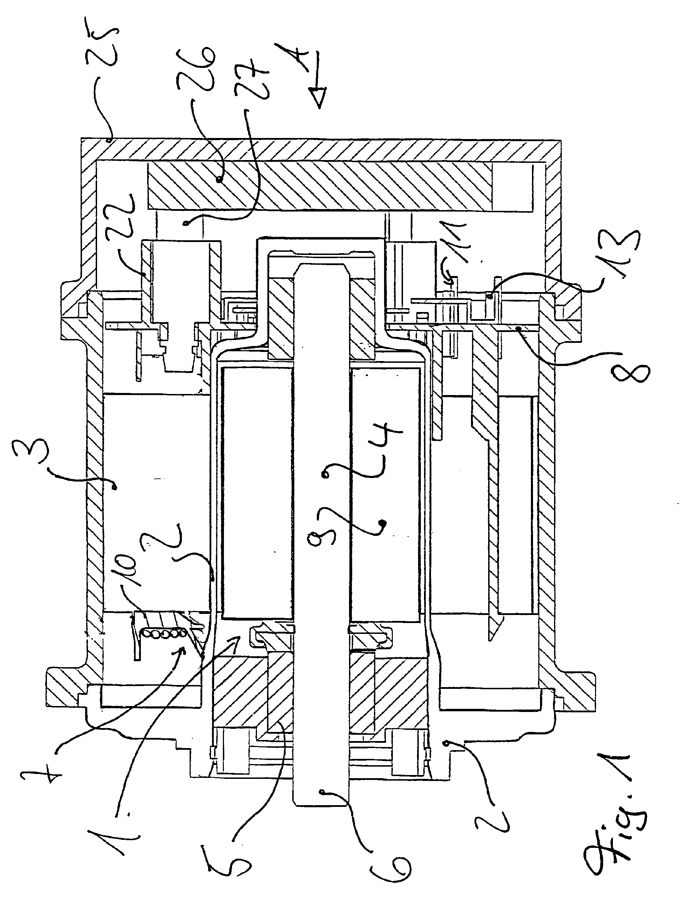

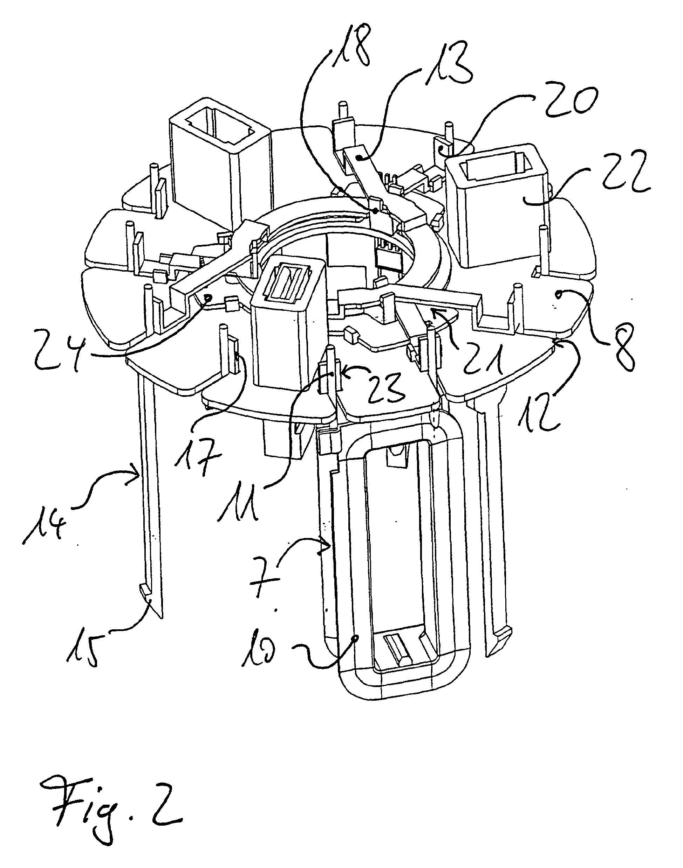

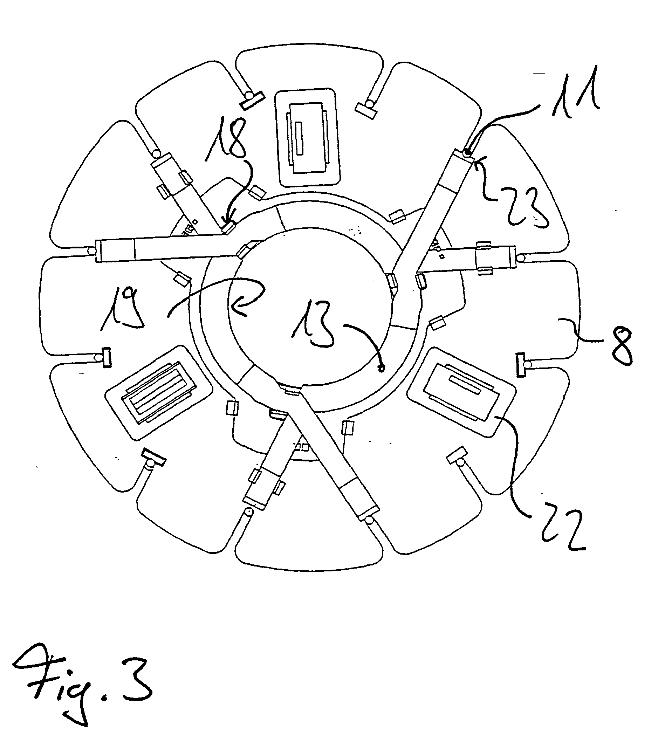

Figur 1 zeigt einen Drehstrommotor, der zum Antrieb einer Kreiselpumpe oder eines Lüfters geeignet ist. Der Motor ist ein Spaltrohrmotor, bei dem der Rotor 1 durch einen Spalttopf 2 vom Stator 3 getrennt ist. Innerhalb des Spalttopfes 2 ist die Welle 4 in Gleitlagern 5 gelagert, auf deren Kopf 6 ein Laufrad bzw. ein Ventilatorflügels aufgesetzt werden kann. Die Wicklungen 7 des Stators 3 sind auf einem rahmenförmigen Halterungen 10 gehalten. Als wesentliches Bauteil weist der Kontaktträger eine aus Kunststoff gespritzte scheibenförmige Grundplatte 8 auf (Figur 2), die bezogen auf die Einschubrichtung (Pfeil A) von hinten auf das Ende des Spalttopfes 2 aufsetzbar ist, so dass dieser eine zentralen Öffnung 19 (Figur 3) der Grundplatte 8 durchragt. Die Grundplatte 8 trägt auf ihrer den Wicklungen abgewandten Außenseite Vorrichtungen zur Kontaktierung der Wicklungen 7 und 9. An der Innenseite sind Befestigungselemente 14 mit Rastnasen 15 angeformt, die den Halt des Kontaktträgers am Stator ermöglichen.

Figur 2 zeigt eine Grundplatte 8, an der beispielhaft eine von sechs axial ausgerichteten Statorwicklungen 7 befestigt ist. Die Wicklung 7 ist auf die rahmenförmige Halterung 10 gewickelt und erzeugt im Betrieb ein Magnetfeld in radialer Richtung. Sie ist derart aus starrem Wicklungsdraht gewickelt, dass die beiden starren und abisolierten Enden 11 in der Wickelebene parallel verlaufen und beim axialen Aufsetzen der Grundplatte 8 auf den Stator in Ausnehmungen 12 der Grundplatte 8 eingeführt werden. Die so zur Außenseite der Grundplatte 8 geführten Enden 11 sind über Leiterbleche 13 elektrisch miteinander verbunden. Die Leiterbleche 13 sind als Metallbänder aus Blech ausgestanzt und in vertikaler Richtung gebogen.

Im vorliegenden Fall weist der Drehstrommotor sechs auf Polschenkel gewickelte Wicklungen 7 mit dementsprechend zwölf Enden auf, wobei die Enden die Grundplatte 8 in symmetrischer Teilung mit einem Teilungswinkel von 30° durchragen. Im vorliegenden Ausführungsbeispiel ist eine Sternschaltung realisiert. Dabei werden bei dem Drehstrommotor je zwei gegenüberliegende Wicklungen 7 über ein Leiterblech 13 zu einem Wicklungspaar zusammengeschlossen, so dass zur Kontaktierung sechs Enden verbleiben. Von den verbleibenden sechs Enden sind drei über ein nicht dargestelltes auf der Innenseite 16 der Grundplatte 8 angeordnetes Leiterblech zu einem Sternpunkt kurzgeschlossen. Dieses Leiterblech ist über drei durch die Grundplatte 8 hindurch gesteckte Kontaktzungen 17 mit den drei Enden der drei Spulenpaare elektrisch kontaktiert. Die Kontaktierung des den Sternpunkt bildenden Leiterbleches erfolgt dabei über einen nicht dargestellten Außenkontakt.

Die Leiterbleche 13 sind auf Grundplatte 8 mit Rasthaken 18 befestigt, so dass sie bei der Montage des Kontaktträgers gehalten sind. Die auch mittels Schneidkanten angebracht oder in den Kunststoff der Grundplatte eingebettet werden. Alle drei Leiterbleche 13 weisen dieselbe Bauform auf. Sie sind so auf der Grundplatte 8 angeordnet, dass sie die Öffnung 19 symmetrisch umgeben. Die Leiterbleche 13 haben flexible Kontaktzungen 20, die zur Kontaktierung an die starren abisolierten Enden 11 anlegbar sind. Zur Kontaktierung werden die Kontaktzungen 20 mit den Enden 11 verlötet, verschweißt, verkrimpt oder verklemmt.

Im vorliegenden Fall sind die drei Leiterbleche 13 derart auf der Außenseite der Grundplatte 8 angeordnet, dass jedes der drei Leiterbleche 13 jeweils eines der anderen Leitbleche 13 an einem Kreuzungspunkt 21 überbrückt. Dabei weisen die Leiterbleche 13 an jedem Kreuzungspunkt 21 einen für die Isolation nötigen Abstand auf. Die drei Wicklungspaare werden über jeweils einen auf der Außenseite der Grundplatte 8 gehaltenen Steckverbinder 22 an eine externe Versorgungsspannung angeschlossen. Die Kontaktierung zwischen einem Steckverbinder 22 und einem Ende 11 einer Wicklung 7 geschieht über ein Leiterblech, das auf der Innenseite der Grundplatte 8 verläuft und mit einer Zunge 23 am Ende 11 einer Wicklung 7 angeschlossen ist und mit dem anderen Ende in den Steckverbinder 22 ragt. Nachdem der Kontaktträger montiert und kontaktiert ist, wird die in einem Elektronikdeckel 25 (Figur 1) angeordnete Steuerelektronik 26 auf die hintere Stirnseite des Motors in axialer Richtung aufgesetzt. Dabei werden Steckkontakte 27 in die Steckverbinder 22 eingeführt.

Das gezeigte Ausführungsbeispiel eines Kontaktträgers weist auf seiner Außenseite eine Halterung 24 für einen Hallsensor zur Messung des von den Rotormagneten erzeugten Magnetfeldes auf.

## Patentansprüche

1. Elektromotor, insbesondere zum Antrieb einer Kreiselpumpe oder eines Lüfters, mit einem mehrere Wicklungen (7) eines Stators (3) tragenden Kontaktträger, der in axialer Richtung aufschiebbar ist, wobei der Kontaktträger eine Grundplatte (8) aufweist, die auf der der Abtriebswelle gegenüberliegenden Seite des Stators (3) angeordnet ist und die auf der dem Stator (3) abgewandten Außenseite Vorrichtungen zur Kontaktierung der Wicklungen (7) trägt, wobei die Enden (11) der Wicklungen (7) zur Außenseite der Grundplatte (8) geführt sind und diese in symmetrischer Teilung durchragen, wobei jeweils zwei gegenüberliegende Wicklungen (7) über ein Leiterblech (13) zu einem Wicklungspaar zusammengeschlossen sind und wobei die Leiterbleche (13) auf der Außenseite der Grundplatte (8) angeordnet sind,
**dadurch gekennzeichnet, dass** die Leiterbleche (13) auf der Außenseite der Grundplatte (8) so angeordnet sind, dass sie sich kreuzen, wobei jedes der Leiterbleche (13) jeweils eines der anderen Leiterbleche an einem Kreuzungspunkt (21) überbrückt.

2. Elektromotor nach Anspruch 1,
**dadurch gekennzeichnet, dass** die Grundplatte (8) drei Leiterbleche (13) aufweist, wobei jedes der drei Leiterbleche (13) jeweils eines der anderen Leitbleche (13) an einem der Kreuzungspunkte (21) überbrückt.

3. Elektromotor nach Anspruch 1 oder 2,
**dadurch gekennzeichnet, dass** die drei Leiterbleche (13) die gleiche Form aufweisen.

4. Elektromotor nach einem der vorherigen Ansprüche, ,
**dadurch gekennzeichnet, dass** der Kontaktträger auf den Stator in axialer Richtung aufschiebbar ist.

5. Elektromotor nach einem der vorherigen Ansprüche,
**dadurch gekennzeichnet, dass** der Stator sechs Wicklungen mit entsprechend zwölf Enden hat, wobei die sechs Wicklungen mit drei Leiterblechen zu drei Wicklungspaaren zusammengeschlossen werden, die sich in drei Punkten kreuzen.

6. Elektromotor nach einem der vorherigen Ansprüche, ,
**dadurch gekennzeichnet, dass** die Leiterbleche (13) auf der Außenseite und/oder auf der Innenseite der Grundplatte (8) befestigbar sind.

7. Elektromotor nach einem der vorherigen Ansprüche,
**dadurch gekennzeichnet, dass** die Wicklungen (7) aus starrem Wicklungsdraht gewickelt sind, dessen Enden (11) Ausnehmungen (12) der Grundplatte (8) in axialer Richtung-durchragen.

8. Elektromotor nach einem der vorherigen Ansprüche,
**dadurch gekennzeichnet dass** die Leiterbleche (13) Kontaktzungen aufweisen, die zur Kontaktierung an die Enden (11) anlegbar sind.

9. Elektromotor nach einem der vorherigen Ansprüche,
**dadurch gekennzeichnet, dass** die Leiterbleche (13) durch Rastnasen (18) an der Grundplatte (8) gehalten sind.

10. Elektromotor nach einem der vorherigen Ansprüche,
**dadurch gekennzeichnet, dass** die Grundplatte (8) scheibenförmig ist und eine zentrale Öffnung (19) aufweist.

11. Elektromotor nach einem der vorherigen Ansprüche,
**dadurch gekennzeichnet, dass** auf der Innenseite der Grundplatte (8) ein Leiterblech (13) mit drei Kontaktzungen (17) angeordnet ist, über das drei Enden der drei Wicklungspaare zu einem Sternpunkt zusammengeschlossen sind.

12. Elektromotor nach einem der vorherigen Ansprüche,
**dadurch gekenntzeichnet,** daß eines der Leiterbleche (13) mit einem Außenkontakt verbunden ist.

13. Elektromotor nach einem der vorherigen Ansprüche,
**dadurch gekennzeichnet,dass** auf der Außenseite der Grundplatte (8) drei Steckverbinder (22) als Außenkontakt zur Kontaktierung der drei Wicklungspaare mit der Versorgungsspannung angebracht sind.

14. Elektromotor nach einem der vorherigen Ansprüche,
**dadurch gekennzeichnet, dass**dieWicklungen(7)auf rahmenförmige Halterungen (10) aufgewickelt sind und ein Magnetfeld in radialer Richtung erzeugen.

15. Elektromotor nach einem der vorherigen Ansprüche,
**dadurch gekennzeichnet, dass** die Leiterbleche (13) aus Metallband gebogen sind.

## Claims

1. Electromotor, particularly one for driving a rotary pump of a fan, with a contact support member that can be pushed up in an axial direction and that carries several coils (7) of a stator (3), whereby the contact support member has a base plate (8) that is disposed on the side of the stator (8) opposite the drive shaft and that carries the devices, for contacts to the coils (7), on the outer side facing away from the stator (3), whereby the ends (11) of the coils (7) are guided to the outer side of the base plate (8) and, with symmetrical distribution, extend through this outer side, whereby two opposite coils (7) are in each case connected, by means of a conductor plate (13), to form a winding pair and whereby the conductor plates (13) are disposed on the outside of the base plate (8),
**characterized in that**
the conductor plates (13) are disposed on the outside of the base plate (8) such that they cross each other whereby each of the conductor plates (13) in each case bridges one of the other conductor plates (13) at a crossing point.

2. Electromotor in accordance with claim 1,
**characterized in that**
the base plate (8) has three conductor plates (13) whereby each of the three conductor plates (13) in each case bridges one of the other conductor plates (13) at a bridging point (21).

3. Electromotor in accordance with claims 1 or 2,
**characterized in that**
the three conductor plates (13) are of the same shape.

4. Electromotor in accordance with one of the preceding claims,
**characterized in that**
the contact support member can be pushed onto the stator in an axial direction.

5. Electromotor in accordance with one of the previous claims,
**characterized in that**
the stator has six coils with twelve ends, whereby the six coils are connected by means of three conductor plates to form three winding pairs that cross each other at three points.

6. Electromotor in accordance with one of the preceding claims,
**characterized in that**
the conductor plates (13) can be attached to the outside and/or to the inside of the base plate (8).

7. Electromotor in accordance with one of the preceding claims,
**characterized in that**
the coils (7) are wound from stiff winding wire and their ends (11) project axially through clearances (12) in the base plate (8).

8. Electromotor in accordance with one of the preceding claims,
**characterized in that**
the conductor plates (13) have contact pins that can be placed on the ends (11) to form contacts.

9. Electromotor in accordance with one of the preceding claims,
**characterized in that**
the conductor plates (13) are held on the base plate (8) by detents (18).

10. Electromotor in accordance with one of the preceding claims,
**characterized in that**
the base plate (8) is disc-shaped and has a central aperture (19).

11. Electromotor in accordance with one of the preceding claims,
**characterized in that**
a conductor plate (13), by means of which the ends of the three winding pairs are connected to form a star point, and having three contact pins (17), is disposed on the inside of the base plate (8).

12. Electromotor in accordance with one of the preceding claims,
**characterized in that**
a conductor plate (13) is connected to the outer contact.

13. Electromotor in accordance with one of the preceding claims,
**characterized in that**
three socket connectors (22) are attached to the outside of the base plate (8) as an outer contact for the connection of three winding pairs to the supply voltage.

14. Electromotor in accordance with one of the preceding claims,
**characterized in that**
the coils (7) are wound on frame-type mounting means (10) and produce a magnetic field in a radial direction.

15. Electromotor in accordance with one of the preceding claims,
**characterized in that**
the conductor plates (13) are curved from a metal strip.

## Revendications

1. Moteur électrique, en particulier pour entraîner une pompe centrifuge ou un ventilateur, comportant un support de contact supportant plusieurs enroulements (7) d'un stator (3), qui peut être enfilé par glissement dans la direction axiale, le support de contact comportant une plaque de base (8) qui est disposée sur le côté du stator (3) situé en vis-à-vis de l'arbre de sortie, et qui, sur le côté extérieur détourné du stator (3), porte des dispositifs pour la mise en contact des enroulements (7), les extrémités (11) des enroulements (7) étant guidées vers le côté extérieur de la plaque de base (8) et traversant celle-ci en division symétrique, deux enroulements (7) en vis-à-vis l'un de l'autre étant à chaque fois réunis en une paire d'enroulements par l'intermédiaire d'une tôle conductrice (13) et les tôles conductrices (13) étant disposées sur le côté extérieur de la plaque de base (8),
**caractérisé en ce que** les tôles conductrices (13) sont disposées sur le côté extérieur de la plaque de base (8) de telle façon qu'elles se croisent, chacune des tôles conductrices (13) réalisant un pont sur l'une des autres tôles conductrices en un point de croisement (21).

2. Moteur électrique selon la revendication 1,
**caractérisé en ce que** la plaque de base (8) comporte trois tôles conductrices (13), chacune des trois tôles conductrices (13) réalisant à chaque fois un pont sur l'une des autres tôles conductrices (13) en l'un des points de croisement (21).

3. Moteur électrique selon la revendication 1 ou 2,
**caractérisé en ce que** les trois tôles conductrices (13) présentent la même forme.

4. Moteur électrique selon l'une des revendications précédentes,
**caractérisé en ce que** le support de contact peut être enfilé sur le stator par glissement dans la direction axiale.

5. Moteur électrique selon l'une des revendications précédentes,
**caractérisé en ce que** le stator comporte six enroulements comportant douze extrémités correspondantes, les six enroulements étant réunis avec trois tôles conductrices en trois paires d'enroulements qui se croisent en trois points.

6. Moteur électrique selon l'une des revendications précédentes,
**caractérisé en ce que** les tôles conductrices (13) peuvent être fixées sur le côté extérieur et/ou sur le côté intérieur de la plaque de base (8).

7. Moteur électrique selon l'une des revendications précédentes,
**caractérisé en ce que** les enroulements (7) sont enroulés à partir d'un fil rigide, dont les extrémités (11) traversent des évidements (12) de la plaque de base (8) dans la direction axiale.

8. Moteur électrique selon l'une des revendications précédentes,
**caractérisé en ce que** les tôles conductrices (13) comportent des languettes de contact qui peuvent être apposées sur les extrémités (11) pour la mise en contact.

9. Moteur électrique l'une des revendications précédentes,
**caractérisé en ce que** les tôles conductrices (13) sont maintenues sur la plaque de base (8) par des ergots d'encliquetage (18).

10. Moteur électrique selon l'une des revendications précédentes,
**caractérisé en ce que** la plaque de base (8) est en forme de disque et comporte une ouverture centrale (19).

11. Moteur électrique selon l'une des revendications précédentes,
**caractérisé en ce que** sur le côté intérieur de la plaque de base (8) est disposée une tôle conductrice (13) dotée de trois languettes de contact (17), par l'intermédiaire de laquelle trois extrémités des trois paires d'enroulements sont réunies pour former un point d'étoile.

12. Moteur électrique selon l'une des revendications précédentes,
**caractérisé en ce que** l'une des tôles conductrices (13) est reliée à un contact extérieur.

13. Moteur électrique selon l'une des revendications précédentes,
**caractérisé en ce que** trois connecteurs (22) sont montés sur le côté de la plaque de base (8) en tant que lieu de contact extérieur pour la mise en contact des trois paires d'enroulements avec la tension d'alimentation.

14. Moteur électrique selon l'une des revendications précédentes,
**caractérisé en ce que** les enroulements (7) sont enroulés sur des supports en forme de cadres (10) et génèrent un champ magnétique dans la direction radiale.

15. Moteur électrique selon l'une des revendications précédentes,
**caractérisé en ce que** les tôles conductrices sont pliées à partir de bande de métal.
